# EUROPÄISCHE PATENTANMELDUNG

(11) **EP 1 241 563 A2**
(43) Veröffentlichungstag der Anmeldung: **18.09.2002**
(21) Anmeldenummer: 02004388.1
(22) Anmeldetag: 06.03.2002
(51) Int. Cl.: G06F 3/12

(54) **Verfahren zur Verbesserung der Druckeffizienz**

(30) Priorität: 16.03.2001 US 809962
(71) Anmelder: Heidelberger Druckmaschinen Aktiengesellschaft, 69115 Heidelberg (DE)
(72) Erfinder: Housel, Edward M., Rochester, N.Y. 14624 (US); Reeder, Mark, Rochester, N.Y. 14618 (US)
(74) Vertreter: Franzen, Peter

(57) **Zusammenfassung**

Beschrieben wird ein zum Erzeugen eines elektronischen Proofsatzes eines digitalen Druckauftrags und Verzögern der Fertigstellung des Drucksatzes so lange, bis der Proofsatz freigegeben ist. Die Erfindung umfasst zudem das Erstellen eines elektronischen Proofsatzes, der zur Freigabe per e-Mail übertragbar ist.

## Beschreibung

Die vorliegende Erfindung betrifft allgemein den Bereich der digitalen Bildaufzeichnung. Insbesondere betrifft die vorliegende Erfindung die digitale Bildaufzeichnung zum Drucken von Dokumenten und Bildern sowie Verfahren zur Verbesserung der Druckeffizienz.

Digitale Hochgeschwindigkeitsdrucker werden heute verbreitet für zahlreiche Produktionsprozesse eingesetzt, vom Drucken eines einzelnen Dokuments bis hin zur auflagenstarken Anfertigung von Dokumenten in mehreren Exemplaren. In einem typischen System wird das zu druckende Dokument oder Bild durch digitale Daten dargestellt. Diese Daten lassen sich entweder durch Abtasten oder Scannen erzeugen oder durch digitale Erstellung des Dokuments oder Bildes mithilfe eines Computers. Die Daten werden normalerweise über eine Netzverbindung an einen Drucker übergeben. Die Daten werden dann von einem Rasterbildprozessor (RIP/Raster Image Processor) verarbeitet, der dem Drucker zugeordnet ist, und in ein von dem Drucker verwendbares Format zur Erstellung des Bildes umgesetzt.

Historisch gesehen wurde ein Druckauftrag ausgeführt, sobald er an eine Druckvorrichtung (einen Drucker) gesendet worden war, was dazu führte, dass der Auftrag auch dann abgeschlossen wurde, wenn vor Abschluss des Druckvorgangs Fehler erkannt worden waren. Aus dem Stand der Technik sind Drucker mit Vorrichtungen bekannt, über die ein Bediener einen Druckauftrag abbrechen konnte; allerdings bedurften diese Vorrichtungen normalerweise ein umfangreiches Eingreifen des Bedieners in den Druckauftrag. Daher mussten Druckaufträge aufgrund von Problemen, die später in dem Druckauftrag auftraten, nicht selten mehrmals gedruckt werden. Dies ist besonders bei großen Druckaufträgen problematisch, bei denen mehrere Exemplare eines Dokuments gedruckt werden, da ein erneuter Drucklauf teuer und materialintensiv ist.

Einige neuere Drucker ermöglichen die Erstellung eines Proofsatzes, damit der Bediener den Druckauftrag vor Anfertigung mehrerer Exemplare überprüfen kann. Der Drucker nimmt einen Druckauftrag von dem RIP entgegen und druckt einen Proofsatz. Der Druckauftrag wird dann in eine Warteschlange gestellt, während der Proofsatz kontrolliert wird, bevor der gesamte Produktionslauf gestartet wird. Ein derartiges Proofing stellt ein wirksames Verfahren dar, um Ressourcen zu schonen und Kosten zu senken, indem die Erstellung mehrerer fehlerhafter Exemplare eines Auftrag vermieden wird. Wenn der Bediener Fehler in dem Proofsatz entdeckt, werden die notwendigen Schritte zur Behebung der Fehler durchgeführt, bevor weitere Kosten anfallen oder Abfall produziert wird.

Zwar ist die Fähigkeit, einen Proofsatz zu erstellen, hilfreich, aber das dem Stand der Technik entsprechende Verfahren, einen Proofsatz zu drucken, den Proofsatz an den Kunden zu übergeben und darauf zu warten, dass der Kunde den Druckauftrag prüft, bevor der Druckauftrag abgesagt oder ausgeführt wird, ist teuer, langsam und im Allgemeinen ineffizient. Insbesondere große oder komplexe Druckaufträge tragen nach dem derzeitigen Verfahren zu einem erhöhten Zeit- und Kostenaufwand bei. Daher verlangen Kunden zunehmend danach, einen Druckauftrag noch vor dem Erzeugen eines Proofsatzes daraufhin prüfen zu können, ob der Druckauftrag wie gewünscht gedruckt werden kann.
Es besteht daher ein Bedarf an einem Verfahren, das die Prüfung von Proofsätzen von Druckaufträgen erleichtert.

Neben den genannten Anforderungen besteht zudem Bedarf an einer höheren Geschwindigkeit und Effizienz bei der Erhebung der Abrechnungs- und Kontierungsinformationen der einzelnen Drucker. Abrechnungs- und Kontierungsinformationen lassen sich derzeit nur manuell durch Zugreifen auf jede einzelne Maschine erheben. Dieses Verfahren ist zeitaufwändig, langsam und ineffizient.

Der vorliegenden Erfindung liegt die Aufgabe zugrunde, Verfahren bereitzustellen, die die Möglichkeit zur Durchführung von Korrekturen an einem Proofsatz verbessern. Wenn eine digitale Darstellung eines Dokuments oder Bildes von dem RIP verarbeitet wird, können Informationen verfügbar sein oder sind verfügbar, die zur Verarbeitung von Proofsätzen beitragen. Derartige Informationen umfassen Seitenzahl, Ausgabeseitenzahl, Sonderbefehle usw. Nach der vorliegenden Erfindung umfassen derartige Informationen zudem die elektronische Erstellung eines Proofsatzes. Die vorliegende Erfindung stellt dem Benutzer oder Kunden diese Informationen aus dem RIP elektronisch bereit, etwa als eine HTML-Seite oder als Inhalt oder Anhang einer E-Mail. Die Informationen könnten dann als Hilfsmittel in dem Proofingprozess herangezogen werden. Sobald der Auftrag den Proofingprozess durchlaufen hat, kann der Druckauftrag entweder verworfen werden, oder der Benutzer kann angewiesen werden, den Auftrag zu drucken.

Ein Aspekt der vorliegenden Erfindung betriff ein Verfahren zum Drucken eines Proofsatzes eines Dokuments. Nach dem Verfahren wird ein Druckauftrag analysiert, um festzustellen, ob ein Proofsatz auf einer HTML-Seite gedruckt oder zum Kunden per E-Mail gesandt werden sollte. Nachdem diese Feststellung getroffen worden ist, werden die Seiten des Druckauftrags gerastert und in einer Rasterspeicherdatei abgelegt. Die Rasterspeicherdatei umfasst nicht nur die gerasterte Seite, sondern auch gerasterte Informationen bezüglich der Merkmale. Der elektronische Proofsatz wird dann erstellt, und es wird ein E-Mail an den Kunden gesandt. Der Druckauftrag wird in eine Warteschlange gestellt, während der Proofsatz überprüft werden kann. Sobald Benutzeranweisungen eingehen, die anzeigen, dass der Proofsatz freigegeben wird, wird der Druckauftrag in der Warteschlange freigegeben. Der Druckauftrag wird dann in seiner endgültigen Form gedruckt, wobei alle Merkmalsinformationen unterdrückt werden, die zuvor auf den Seiten des Drucksatzes gedruckt worden sind.

Ein weiterer Aspekt der Erfindung ermöglicht es dem Drucker, E-Mails über den Status eines Druckauftrags zu versenden. Die den Status betreffenden E-Mails können Nachrichten über den Druckstatus umfassen (der Auftrag ist in die Warteschlange eingereiht) und auch Abrechnungs- oder Kontierungsinformationen (Zählstandswerte).

Die Erfindung wird im folgenden anhand in der Zeichnung dargestellter Ausführungsbeispiele näher erläutert.

### Es zeigen

- Fig. 1: ein typisches Layout eines digitalen Drucksystems.
- Fig. 2: ein detailliertes Layout des von den erfindungsgemäßen Verfahren verwendeten digitalen Druckers.
- Fig. 3: ein Ablaufdiagramm zur Darstellung der Aspekte des erfindungsgemäßen Verfahrens.

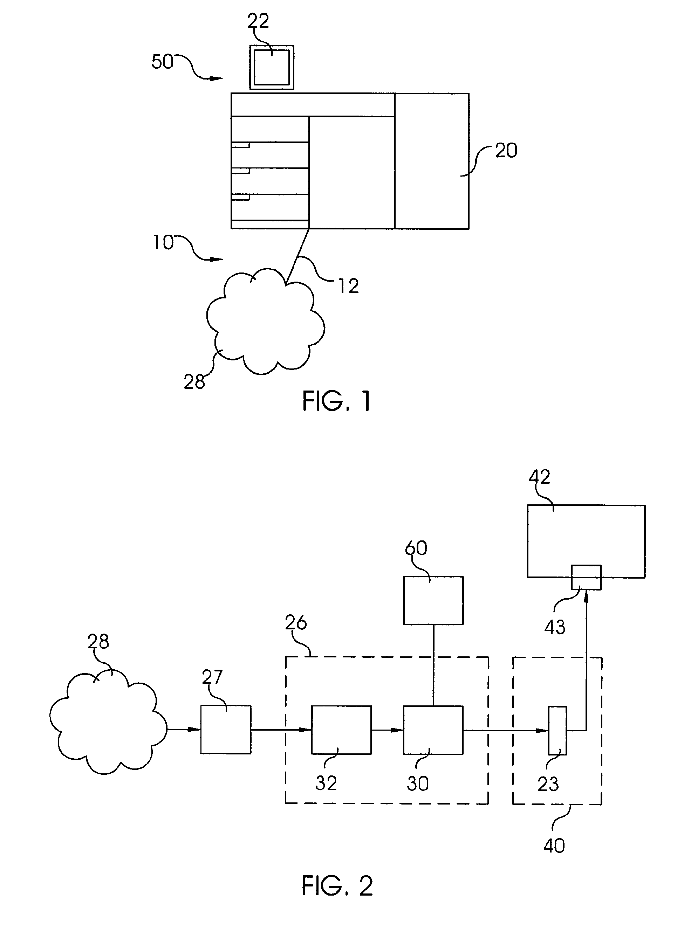

Wie in Fig. 1 u. 2 gezeigt, umfasst ein die vorliegende Erfindung verwendendes typisches Drucksystem einen digitalen Drucker 20, vorzugsweise einen digitalen Hochgeschwindigkeitsdrucker, mit einer Druckerbenutzeroberfläche 22. Zwar wird das beispielhafte Drucksystem 10 als vernetztes Drucksystem dargestellt, das darauf ausgelegt ist, entfernte Eingaben über eine Netzverbindung zu erhalten, aber es sind innerhalb des Geltungsbereichs der vorliegenden Erfindung auch andere Konfigurationen vorgesehen und möglich. Beispielsweise würde ein System mit lokaler Eingabe und/oder mit mehreren Druckern, die an dasselbe Netz angeschlossen sind, auch in den Geltungsbereich der vorliegenden Erfindung fallen. Obwohl hier eine bestimmte Druckerkonfiguration besprochen wird, sei darauf hingewiesen, dass die vorliegende Erfindung in anderen Druckersystemkonfigurationen verwendbar ist.

Der Drucker 20 umfasst einen Rasterbildprozessor (RIP/Raster Image Processor) 26, der aus dem Netz 28 eingehende Daten empfängt, mit dem der Drucker 20 verbunden ist. Vor Übertragung an den Rasterbildprozessor 26 kann der Druckauftrag in eine Druckwarteschlange 27 im Netz 28 gestellt werden. Der Rasterbildprozessor 26 umfasst eine Verarbeitungseinheit 30, die Steuerbefehle und Daten aus dem Netz 28 empfängt. Die Steuerbefehle werden von der Verarbeitungseinheit 30 in eine Maschinensteuerungssprache umgesetzt, während eingehende Druckaufträge und Programmcodes in einem Druckauftragsspeicher 32 abgelegt werden, der auch als RIP-Warteschlange bezeichnet wird.

Der Drucker 20 kann zudem eine Markierungseinheit 40 umfassen, die notwendige Papiertransport- und Papierverarbeitungskomponenten beinhaltet, beispielsweise zur Erstellung von Bildern auf Ausgabeseiten. Die Markierungseinheit 40 empfängt und speichert in einem Mehrseitenbildpuffer 23 einen Datenstrom, der von der Verarbeitungseinheit 30 erzeugte Bilddaten und Steuerdaten umfasst. Die Bilddaten werden verarbeitet und an einen (nicht gezeigten) Schreibkopf zur Übertragung auf die Ausgabeseiten übermittelt.

Die Markierungseinheit 40 umfasst zudem Ausgabevorrichtungen, die die gedruckten Ausgabeseiten an eine oder mehrere Endverarbeitungsvorrichtungen 42 übergeben, die über eine einfache elektrische Verbindung 12 mit dem Drucker 20 verbunden sind. Die Endverarbeitungsvorrichtung 42 umfasst eine Endverarbeitungs-Benutzeroberfläche 43. Die Endverarbeitungsvorrichtung 42 kann jede gängige Endverarbeitungsvorrichtung sein, etwa ein Lochstanzer oder ein Bindegerät.

Der Drucker 20 ist mit einer Schalt- und Steuereinheit 50 ausgestattet, die ihrerseits mit einer Druckerbenutzeroberfläche 22 versehen ist, über die der Benutzer Funktionen eingibt und Nachrichten des Druckers 20 empfängt. Zudem ist der Drucker 20 mit einer Datenbank 60 für gemeinsame Anweisungen ausgestattet, die auf einer lokalen Festplatte abgelegt sind, auf die der Rasterbildprozessor 26 Zugriff hat. Die in der Datenbank 60 gespeicherten Anweisungen umfassen beispielsweise Einrichtanweisungen für eine bestimmte Endverarbeitungsvorrichtung, die von dem Benutzer auf alle Fälle zu beachten sind, unabhängig davon, welche Konfiguration im jeweiligen Fall gewählt wird. Im Allgemeinen handelt es sich dabei um Anleitungen zum physischen Einrichten einer vorhandenen Endverarbeitungsvorrichtung. Beispielsweise kann ein Lochstanzer mit Arretierungen ausgestattet sein, die physisch in eine gewünschte Position gebracht werden müssen, die aber mit Federstiften gesichert sind, die man vorher entfernen muss.

Auf der höchsten Ebene muss der Druckauftrag mit einigen wichtigen Auftragsanforderungsinformationen am RIP 26 eintreffen. Diese Informationen beziehen sich im Allgemeinen auf Merkmale des Druckauftrags. Ein derartiges Merkmal ist die Anforderung eines Proofsatzes. Die vorliegende Erfindung betrifft Druckaufträge, die ein derartiges Merkmal beinhalten.

Das digitale Drucken setzt voraus, dass eine elektronische Version des zu druckenden Dokuments (des Druckauftrags) erstellt wird. Üblicherweise handelt es sich bei dieser elektronischen Version des Dokuments um eine computerlesbare Datei, die in einer sogenannten Seitenbeschreibungssprache geschrieben worden ist (Page Description Language/PDL), wobei selbstverständlich auch andere Formate verwendbar sind. PDL-Dateien beinhalten Befehle im ASCII-Format (American Standard Code for Information Interchange). Die Speicherung eines Dokuments in Form einer PDL-Datei hat den Vorteil, dass die PDL-Datei normalerweise viel kleiner ist, als wenn das Dokument als Bitmap-Bilddatei gespeichert würde. Die Druckvorrichtung liest die PDL-Datei und führt Druckfunktionen gemäß der Anweisungen in der PDL-Datei durch. Es ist wesentlich effizienter, Anweisungen an die Druckvorrichtung in Form von ASCII-Code zu senden, als ein Bitmap-Bild des Dokuments zu erstellen und es dann in Bitmap-Form an die Druckvorrichtung zu senden. Beispielsweise ist es wesentlich effizienter, einige ASCII-Zeichen an die Druckvorrichtung zu senden, die die Druckvorrichtung anweisen, die Zeichenfolge "PDF" in der Schrift Times New Roman mit Punktgröße 24 zu drucken, als ein Bitmap-Bild der Zeichenfolge mit einer Auflösung von 600 Punkten pro Zoll (dpi) zu erstellen und dieses Bitmap-Bild dann an die Druckvorrichtung zu senden. Beispiele für PDL-Dateiformate sind das PDF-Format (Portable Document Format/PDF) und das PostScript-Format, die beide von Adobe Systems Inc. aus Palo Alto, Kalifornien, USA, stammen.

PDL-Dateien werden üblicherweise auf einem computerlesbaren Medium gespeichert und von einem Computer ausgelesen, auf dem ein Druckdokument-Verwaltungsprogramm läuft. Wenn der Auftrag druckreif ist, sendet der Druckerbetreiber einige oder alle PDL-Dateien an einen Rasterbildprozessor (RIP). Der Rasterbildprozessor verarbeitet die erhaltenen PDL-Anweisungen und weist angeschlossene Drucker an, eine oder mehrere Seiten des Dokuments zu drucken. Es sei jedoch darauf hingewiesen, dass die vorliegende Erfindung nicht auf Vorrichtungen oder Konfigurationen beschränkt ist, die ein PDL-Format verwenden. Es sind viele andere Formate zum Speichern von Dokumenten in elektronischer Form möglich, etwa im grafischen Format und auf anderen Speichermedien, wobei die vorliegende Erfindung nicht auf die hier beschriebenen Formate und Medien beschränkt ist.

Rasterbildprozessoren sind nach dem Stand der Technik weit verbreitet. Die Hauptfunktion des Rasterbildprozessors besteht darin, den Eingabeauftrag zu Rasterdaten oder zu einem Datenstrom zu verarbeiten, der aus Bits besteht, die entweder "schwarz" oder "weiß" oder beispielsweise eine von sechszehn Graustufen für jedes Bildelement darstellen. Um diese Verarbeitung vornehmen zu können, besitzt der Rasterbildprozessor eine Fülle von Informationen über den Druckauftrag, die sich für die Verwaltung des Druckvorgangs nutzen lassen.

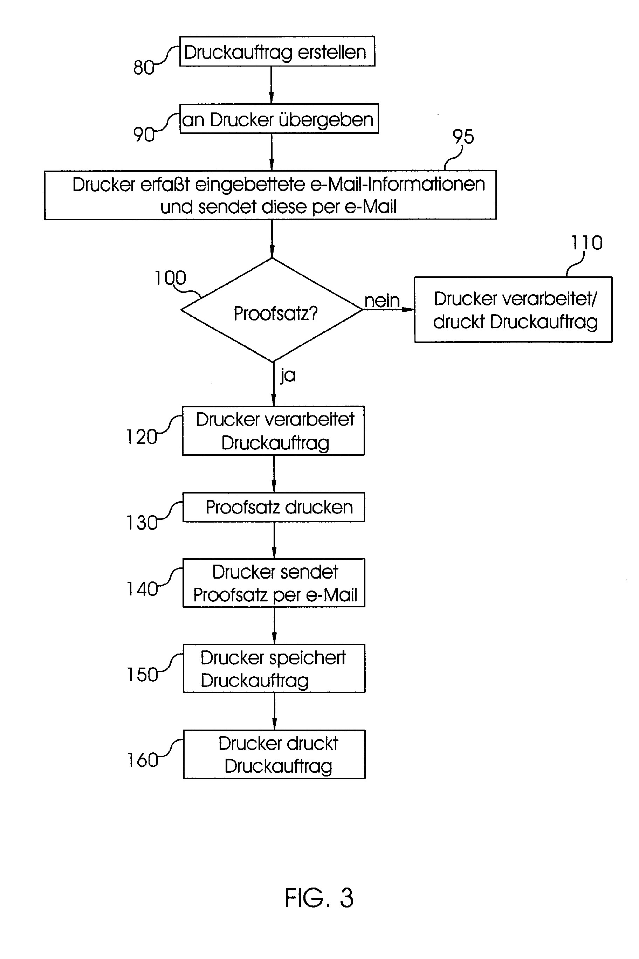

Fig. 3 ist ein Ablaufdiagramm zur Darstellung des Betriebs der vorliegenden Erfindung. In dem erfindungsgemäßen Verfahren analysiert der Drucker 10 durch seinen zugehörigen Rasterbildprozessor 26 den Druckauftrag, um die richtige Handhabung des Auftrags zu ermitteln. Wie in Fig. 3 gezeigt, wird zunächst in Schritt 80 ein Druckauftrag erstellt und dann in Schritt 90 an den Drucker übergeben. Der Druckauftrag wird in Form der bereits angesprochenen PDL-Datei erstellt und enthält eingebettete E-Mail-Informationen, etwa die E-Mail-Adresse der für das Proofing des Druckauftrags zuständigen Person, sowie Anfragen zur Anfertigung eines elektronischen Proofsatzes. Sobald der Druckauftrag in Schritt 90 an den Drucker übergeben worden ist, wird er von dem Rasterbildprozessor 26 entgegengenommen, wobei in Schritt 95 die eingebetteten E-Mail-Informationen erfasst werden. In dem bevorzugten Ausführungsbeispiel der vorliegenden Erfindung sendet der Rasterbildprozessor 26 unverzüglich eine E-Mail über den Status des übergebenen Druckauftrags an die erfasste Adresse. Weitere derartige Statusmeldungen werden im weiteren Verlauf des Druckvorgangs versandt. Diese E-Mail-Statusmeldungen umfassen Meldungen, wie "Auftrag wird in die Warteschlange eingereiht" und "Auftrag wird interpretiert".

Bei der Erfassung der eingebetteten E-Mail-Informationen muss der Rasterbildprozessor 26 auch in Schritt 100 ermitteln, ob der Druckauftrag auch die Erstellung eines Proofsatzes anfordert. Wenn kein Proofsatz angefordert wird, wird der Druckauftrag in Schritt 110 zur üblichen Ausführung übergeben. Wenn ein Proofsatz angefordert wird, wird in Schritt 120 der Druckauftrag von dem Prozessor in dem Drucker verarbeitet. In dem bevorzugten Ausführungsbeispiel der vorliegenden Erfindung wird der Verarbeitungsschritt von dem Rasterbildprozessor 26 abgeschlossen Der Rasterbildprozessor 26 rastert die Seiteninformationen des Druckauftrags in Schritt 120 weiter auf. Wenn beispielsweise ein Auftrag vorliegt, Druckmerkmale auf der Proofseite mit auszugeben, dann erzeugt der Rasterbildprozessor 26 einen Rasterspeicher für das Proofbild unter Verwendung der Merkmale in dem Druckauftrag, rastert die Merkmalsinformationen weiter auf und legt sie in demselben Rasterspeicher mit ab.

Nach dem Rastern des Druckauftrags dient der Rasterspeicher in dem bevorzugten Ausführungsbeispiel in Schritt 130 dazu, einen Proofsatz des Druckauftrags in einem elektronischen Medium zu erzeugen. In einem Ausführungsbeispiel der Erfindung könnte der Proofsatz als eine E-Mail-Meldung erstellt werden, die detailliert beschreibt, wie der Auftrag zu drucken ist, und zwar einschließlich derartiger Merkmalsinformationen, wie der Seitenanzahl, der Art der für jede Seite zu wählenden Medien und der gewählten Endverarbeitungsmöglichkeiten sowie des Textes, der auf jeder Seite steht. In einem anderen Ausführungsbeispiel der Erfindung könnte der Proofsatz als separate Datei erstellt werden, beispielsweise als eine PDF-Datei, die das Rasterbild auf jeder Seite des Druckauftrags sowie die zuvor genannten Merkmalsinformationen umfasst. In dem bevorzugten Ausführungsbeispiel der vorliegenden Erfindung wird der Proofsatz auf einer HTML-Seite erstellt, die ein Rasterbild auf jeder Seite des Druckauftrags enthält. Als Teil des Schrittes 130 zur Erstellung des Proofsatzes bestätigt der Rasterbildprozessor 26, dass alle Seiten des Druckauftrags vorbereitet worden sind.

Sobald alle Seiten in dem Proofsatz in einer ausgewählten elektronischen Datei erstellt worden sind, sendet der Drucker in Schritt 140 ein E-Mail mit dem vollständigen elektronischen Proofsatz an die erfasste Adresse. Das E-Mail enthält den elektronischen Proofsatz entweder als Text des E-Mails, hängt den elektronischen Proofsatz als Datei an oder enthält einen Verweis auf die HTML-Seite, auf der sich der elektronische Proofsatz befindet. Um lange E-Mails und E-Mails mit großen Anhängen zu vermeiden, die Netzprobleme verursachen könnten, wird in der vorliegenden Erfindung die Verwendung eines Verweises auf eine HTML-Seite bevorzugt. Die E-Mails können auch besondere Auftragscodes oder Vorkehrungen für elektronische Signaturen enthalten.

Sobald alle Seiten in dem Proofsatz erstellt worden sind, wird der Druckauftrag in Schritt 150 in eine Warteschlange gestellt. Der Auftrag verbleibt in der Warteschlange, bis die für das Prüfen des Druckauftrags zuständige Person den Druckauftrag freigibt. Um einen Druckauftrag freizugeben oder abzulehnen, kann die für das Prüfen des Druckauftrags zuständige Person mit einem besonders bezeichneten Auftragscode oder einer digitalen Signatur auf das E-Mail antworten. In dem bevorzugten Ausführungsbeispiel unterscheiden sich die Auftragscodes danach, ob der Druckauftrag freigegeben oder abgelehnt worden ist oder ob er einer besonderen Anweisung zu unterziehen ist. Alternativ hierzu könnte der Auftrag einfach mit einem telefonischen Anruf bei dem Druckerbetreiber freigegeben werden. Bei Freigabe wird der Druckauftrag in Schritt 160 aus der Warteschlange herausgenommen, so dass der eigentliche Auftrag gedruckt wird. Wenn der Druckauftrag abgelehnt wird, wird der Auftrag abgebrochen und aus der Warteschlange gelöscht, ohne dass er gedruckt wird.

Art und Umfang der auf den Seiten des Proofsatzes gedruckten Merkmalsinformationen können selbstverständlich unterschiedlich sein. Sie können Merkmale auf Auftragsebene und/oder Seitenebene umfassen. Die Merkmalsinformationen brauchen zudem nicht auf jeder Seite des Proofsatzes gedruckt zu werden. Beispielsweise könnten Merkmalsinformationen auf Auftragsebene nur auf der ersten Seite des Auftrags gedruckt werden, ohne überhaupt Merkmalsinformationen auf Seitenebene zu drucken. Zudem kann es wünschenswert sein, nur ausgewählte Merkmale zu drucken, wobei diese Merkmale nur auf bestimmten Seiten zur Anwendung kommen. Ein gängiges Merkmal von Druckaufträgen ist beispielsweise Simplex/Duplex. Im Simplex-Druck wird die Seite einseitig bedruckt, im Duplex-Druck wird sie beidseitig bedruckt. Es kann wünschenswert sein, Informationen bezüglich des Simplex-/Duplex-Merkmals auf den Proofseiten zu drucken, um sich zu vergewissern, wo sich das Merkmal in dem Dokument ändert.
Mithilfe der vorliegenden Erfindung werden die Informationen auf den Seiten des Proofsatzes gedruckt, und der Bediener kann das Merkmal mit den Druckergebnissen abstimmen. Falls notwendig, kann der Bediener ermitteln, wo sich das Merkmal ändert, um entsprechende Änderungen an der Merkmalseinstellung vorzunehmen.

Der Bediener oder jede andere Person, die die Seite des Proofsatzes betrachtet, ist mithilfe der vorliegenden Erfindung in der Lage, die der Seite zugeordneten Merkmalsinformationen zu erkennen, die bewirkt hat, dass die Seite in dem Proofsatz so gedruckt worden ist, wie sie gedruckt worden ist. Durch das Vorhandensein dieser Informationen ist es einfacher, die Merkmale einzustellen, falls die Proofseite nicht in gewünschter Weise gedruckt worden ist.

Um den Überblick über mehrere Druckaufträge behalten zu können, lässt sich das System so konfigurieren, dass Kontierungsdateien per E-Mail an vorkonfigurierte E-Mail-Adressen gesandt werden. Mit diesem Mechanismus kann der Kunde das Ergebnis mehrerer Aufträge an seinem eigenen Computer vor Ort einsehen. Dasselbe E-Mail kann benutzt werden, um individuelle Abrechnungsinformationen zu erstellen, ohne zum Drucker gehen und dort die Kontierungsinformationen an der Druckerbenutzeroberfläche abrufen zu müssen. In dem bevorzugten Ausführungsbeispiel der vorliegenden Erfindung sendet der Drucker eine E-Mail-Nachricht an vorkonfigurierte E-Mail-Adressen, dass ein Kontierungsprotokoll auf dem System gespeichert wurde. Die Kontierungsprotokolldatei wird der E-Mail-Nachricht vorzugsweise angehängt, so dass es nicht notwendig ist, die Protokolldatei vom Drucker abzurufen. Fachleuten ist selbstverständlich klar, dass diese E-Mail-Funktion mit oder ohne Datenanhang derart einstellbar ist, dass der Vorgang automatisch abläuft, was die Zustellung von Kontierungsinformationen nach einem vom Druckerverwalter eingerichteten Zeitplan ermöglicht.

Obwohl die Erfindung mit besonderem Bezug auf bevorzugte Ausführungsbeispiele beschrieben wurde, ist die Erfindung nicht darauf beschränkt. Beispielsweise ist die Erfindung mit verschiedenen Protokollen verwendbar und ist nicht auf die hier beschriebenen Protokolle beschränkt. Soweit nicht anders angegeben, sind die Ansprüche nicht auf die Reihenfolge oder die Elemente beschränkt. Daher können innerhalb des Schutzbereichs der nachstehenden Ansprüche Änderungen und Abwandlungen der Erfindung vorgenommen werden.

### Bezugszeichen

- 10: Drucksystem
- 12: elektrische Verbindung
- 20: Drucker
- 22: Druckerbenutzeroberfläche
- 23: Mehrseitenbildpuffer
- 26: Rasterbildprozessor
- 27: Druckwarteschlange
- 28: Netzwerk
- 30: Verarbeitungseinheit
- 32: Druckauftragsspeicher
- 40: Markierungseinheit
- 42: Endverarbeitungsvorrichtung
- 43: Endverarbeitungs-Benutzeroberfläche
- 50: Schalt- und Steuereinheit
- 60: Datenbank

## Patentansprüche

1. Verfahren zur Überwachung des Status und zur Gewährleistung einer genauen Ausführung eines Druckauftrags mit folgenden Schritten:
Eingabe eines Druckauftrags in maschinenlesbarer Form;
Einbetten von E-Mail-Informationen in den Druckauftrag;
Senden des Druckauftrags an einen Drucker (20);
Analysieren eines Druckauftrags zwecks Erfassung von E-Mail-Informationen;
Senden von E-Mail-Nachrichten seitens des Druckers (20) bezüglich des Status des Druckauftrags;
Verarbeiten der Seiten des Druckauftrags und Speichern der verarbeiteten Seiten in einer Speicherdatei;
Senden von E-Mail-Nachrichten seitens des Druckers (20) bezüglich der Art, wie der Druckauftrag ausgeführt wird.

2. Verfahren nach Anspruch 1,
**dadurch gekennzeichnet,**
**dass** das Analysieren eines Druckauftrags zur Erfassung von E-Mail-Informationen zudem das Erfassen von E-Mail-Adressinformationen und Anforderungen nach E-Mail-Proofsätzen umfasst.

3. Verfahren nach einem der Ansprüche 1 bis 2,
**dadurch gekennzeichnet,**
**dass** das Verarbeiten der Seiten eines Druckauftrags und das Speichern der verarbeiteten Seiten in einer Speicherdatei durch Rastern der Seiten des Druckauftrags und Speichern der gerasterten Seiten in einem Rasterspeicher abgeschlossen wird.

4. Verfahren nach einem der Ansprüche 1 bis 3,
**dadurch gekennzeichnet,**
**dass** das Verfahren zudem das Erstellen eines elektronischen Proofsatzes umfasst.

5. Verfahren nach Anspruch 1 mit folgenden zusätzlichen Schritten:
Analysieren eines Druckauftrags, um zu ermitteln, ob ein elektronischer Proofsatz gedruckt werden soll;
Rastern der Seiten des Druckauftrags und Speichern der gerasterten Seiten in einem Rasterspeicher;
Erstellen eines elektronischen Proofsatzes;
Senden des elektronischen Proofsatzes in einer E-Mail-Nachricht seitens des Druckers (20).

6. Verfahren nach einem der Ansprüche 1 bis 5,
**dadurch gekennzeichnet,**
**dass** die in den Druckauftrag eingebetteten E-Mail-Informationen zudem die Forderung nach Erstellung eines elektronischen Proofsatzes und nach Übertragung des elektronischen Proofsatzes per E-Mail umfassen.

7. Verfahren nach einem der Ansprüche 1 bis 6,
**dadurch gekennzeichnet,**
**dass** die in den Druckauftrag eingebetteten E-Mail-Informationen zudem E-Mail-Adressinformationen einer oder mehrer Personen umfassen, die als E-Mail-Empfänger von Nachrichten mit Statusinformationen oder eines elektronischen Proofsatzes vorgesehen sind.

8. Verfahren nach einem der Ansprüche 1 bis 7,
**dadurch gekennzeichnet,**
**dass** die Informationen darüber, wie der Druckauftrag gedruckt wird und/oder der Proofsatz im Text oder im Dateienanhang einer E-Mail-Meldung gesendet werden.

9. Verfahren nach einem der Ansprüche 1 bis 7,
**dadurch gekennzeichnet,**
**dass** die Informationen darüber, wie der Druckauftrag und/oder der Proofsatz gedruckt wird, im Dateienanhang einer E-Mail-Meldung als PDF-Datei gesendet werden.

10. Verfahren nach einem der Ansprüche 1 bis 7,
**dadurch gekennzeichnet,**
**dass** die Informationen darüber, wie der Druckauftrag gedruckt wird und/oder der elektronische Proofsatz auf mindestens einer HTML-Seite aufgezeichnet wird, in einer E-Mail-Meldung angegeben wird.

11. Verfahren nach einem der Ansprüche 1 bis 10,
**dadurch gekennzeichnet,**
**dass** die Speicherdatei zudem ein Auftragsdatenprotokoll umfasst, das in den E-Mail-Nachrichten von dem Drucker (20) bezüglich des Druckauftragsstatus bereitgestellt werden kann.

12. Verfahren nach Anspruch 11,
**dadurch gekennzeichnet,**
**dass** das Verfahren zudem das Umwandeln des Auftragsdatenprotokolls in eine von Menschen lesbare Form umfasst.

13. Verfahren nach einem der Ansprüche 11 bis 12,
**dadurch gekennzeichnet,**
**dass** das Auftragsdatenprotokoll zudem ein Kontierungsprotokoll umfasst.

14. Verfahren nach einem der Ansprüche 1 bis 13,
**dadurch gekennzeichnet,**
**dass** das Erstellen eines elektronischen Proofsatzes durch Zugriff auf den Rasterspeicher und durch Erzeugen von Rasterdatendateien in einem elektronischen Medium abgeschlossen wird.

15. Verfahren nach einem der Ansprüche 4 bis 13,
**dadurch gekennzeichnet,**
**dass** das Senden einer E-Mail-Nachricht seitens des Druckers (20) bezüglich der Art, wie der Druckauftrag ausgeführt wird, abgeschlossen wird, indem die Seiten eines elektronischen Proofsatzes in einem Dateianhang zu einer E-Mail-Nachricht gesendet werden.

16. Verfahren nach einem der Ansprüche 1 bis 15,
**dadurch gekennzeichnet,**
**dass** das Verfahren zudem folgende Schritte umfasst:
Speichern des Druckauftrags in einer Druckwarteschlange (27), und
Freigeben des Druckauftrags aus der Druckwarteschlange (27).

17. Verfahren nach Anspruch 16,
**dadurch gekennzeichnet,**
**dass** das Speichern des Druckauftrags erfolgt, während eine Antwort auf die E-Mail-Nachricht bezüglich der Informationen darüber, wie der Druckauftrag gedruckt wird, abgewartet wird.

18. Verfahren nach einem der Ansprüche 16 bis 17,
**dadurch gekennzeichnet,**
**dass** das Freigeben des Druckauftrags aus der Druckwarteschlange (27) nach Erhalt einer Druckauftrags-Freigabekommunikation erfolgt.

19. Verfahren nach Anspruch 18,
**dadurch gekennzeichnet,**
**dass** die Druckauftrags-Freigabekommunikation ein E-Mail mit einem Freigabecode für den Druckauftrag umfasst.

20. Verfahren nach einem der Ansprüche 18 bis 19,
**dadurch gekennzeichnet,**
**dass** die Druckauftrags-Freigabekommunikation von einem Druckerbetreiber empfangen wird.
